(19) Europäisches Patentamt / European Patent Office / Office européen des brevets

(11) **EP 3 923 063 A1**

(12) **EUROPEAN PATENT APPLICATION**
published in accordance with Art. 153(4) EPC

(43) Date of publication:
**15.12.2021 Bulletin 2021/50**

(51) Int Cl.:
*G02C 13/00* (2006.01)   *B23B 5/00* (2006.01)
*G02C 7/02* (2006.01)

(21) Application number: **19914468.4**

(22) Date of filing: **08.02.2019**

(86) International application number:
**PCT/JP2019/004560**

(87) International publication number:
**WO 2020/161878 (13.08.2020 Gazette 2020/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Tokai Optical Co., Ltd.**
**Aichi 444-2192 (JP)**

(72) Inventors:
• **MIURA Hitoshi**
**Okazaki-shi**
**Aichi 444-2192 (JP)**
• **FUJII Teruaki**
**Okazaki-shi**
**Aichi 444-2192 (JP)**

(74) Representative: **Cabinet Beau de Loménie**
**158, rue de l'Université**
**75340 Paris Cedex 07 (FR)**

(54) **NEGATIVE-STRENGTH EYEGLASS LENS BLANK, EYEGLASS LENS, AND METHOD OF PROCESSING NEGATIVE-STRENGTH EYEGLASS LENS BLANK**

(57)   [Problem] The present invention provides a precursor lens with negative power for eyeglasses which gives less sense of strangeness when seen by a third person and requires fewer machining processes, a lens for eyeglasses obtained by machining the precursor lens, and a method for machining a precursor lens with negative power for eyeglasses.

[Solution] A lens shape 19 longer in the horizontal direction than in the vertical direction is set on a lens rear surface side of a material block, and on the rear surface, a concave shape (a first shape) capable of exhibiting optical performance as a lens with negative power prescribed for a wearer is set, and a shape (a second shape) in which a ridge line 18 is formed to have a curved shape not concave outward inside on the ear side of the lens shape at an outer side of a lens use region, a curvature of the curve of the ridge line 18 becomes largest in the vicinity of a center of a vertical width of the lens shape 19, and in which the thickness gradually decreases from the ridge line 18 toward a lens rim, is combined with the first shape.

Fig.1

**Description**

Technical Field

The present invention relates to a precursor lens with negative power for eyeglasses, a lens for eyeglasses, and a method for machining a precursor lens with negative power for eyeglasses.

Background Art

Conventionally, in a lens with negative power for eyeglasses, chamfering is performed on the outside of a lens use region (lens effective region) on a lens rear surface. Chamfering is performed to remove any unnecessary portions of a lens, and is performed for the physical reason that any protruding unnecessary portions are easily damaged, however, the main purpose of chamfering is to obtain an aesthetic appearance of the lens itself, and to prevent a user of eyeglasses, in particular, using a thick lens from giving the impression of wearing an obviously thick lens to a third person facing the user. As a conventional technique of such chamfering of a precursor lens with negative power for eyeglasses, for example, there are techniques disclosed in Patent Literature 1 and Patent Literature 2. In Fig. 2 of Patent Literature 1, a chamfered portion 12 and a cut portion 13 are formed by chamfering the outside of a lens use region. Further, in Patent Literature 2, as illustrated in Fig. 7, a round lens 11 is manufactured from a state of a precursor lens (material block 14) by cutting or grinding with an NC (Numerical Control) machine, and further by chamfering in several steps, the round lens 11 is manufactured.

Citation List

Patent Literature

Patent Literature 1: Fig. 2, Japanese Published Unexamined Patent Application No. 2002-239882
Patent Literature 2: Fig. 7, Japanese Published Unexamined Patent Application No. 2009-208175

Summary of Invention

Technical Problem

However, chamfering in Patent Literature 1 is based on the idea that chamfering is performed on the entire outside of a lens use region. However, in a negative lens having a horizontally long lens shape, chamfering is started from a portion near the eye inside a lens frame, for example, a frame position just above or just below the eye, so that when it is seen by a third person, the third person may sense some strangeness. In chamfering in Patent Literature 2, chamfering must be performed in several steps, and a ridge line is formed at a joining portion between surfaces due to chamfering being performed in several steps, and also in this case, when the lens is seen by a third person, the third person may sense some strangeness. In addition, the number of machining processes increases due to chamfering being performed in several steps.

In a negative lens with a horizontally long lens shape, due to its characteristics, the ear side and the nose side of the lens have distances from a geometric center, so it is preferable to perform large chamfering. In this case, if the lens is thick on the ear side, the thickness is easily seen by others, which has the characteristics of an aesthetically unattractive appearance. On the other hand, on the nose side, the thickness is not easily seen by others but the user's face as seen by others has the characteristics of being distorted. Therefore, it is desirable to perform chamfering in consideration of these problems.

The present invention has been made in consideration of these problems that exist in conventional techniques. An object thereof is to provide a precursor lens with negative power for eyeglasses which does not give a sense of strangeness when it is seen by a third person and requires fewer machining processes, a lens for eyeglasses obtained by machining the precursor lens, and a method for machining a precursor lens with negative power for eyeglasses.

Solution to Problem

To solve the aforementioned problems, the gist of a first means resides in that a precursor lens with negative power for eyeglasses is obtained by rotating a supported lens base material in a circumferential direction, placing a machining tool at a rear surface side of the lens base material, bringing the machining tool into contact with the rear surface of the lens base material by advancing the machining tool relative to the lens base material toward the lens base material and causing the machining tool to perform machining concentrically by a predetermined sag amount at the contact position along with the rotation, and machining the rear surface of the lens base material into a three-dimensional surface shape by moving the machining tool relative to the lens base material so as to approach or move away from a rotation center of the lens base material, wherein a lens shape longer in the horizontal direction than in the vertical direction is set on a lens rear surface side, and on the rear surface, a concave shape (hereinafter, referred to as a first shape) capable of exhibiting optical performance as a lens with negative power prescribed for a wearer is set, and a shape (hereinafter, referred to as a second shape) in which a line (hereinafter, referred to as a ridge line) connecting the thickest positions in a sectional shape from a lens center or the vicinity of the lens center toward a lens rim is formed to have a curved shape not concave outward inside on the ear side of the lens shape at an outer side of a lens use region, a curvature of the curve of the ridge line becomes largest in the vicinity of a center of a vertical width of the lens shape, and in which the thickness gradually decreases from the ridge line toward the lens rim, is combined with the first shape.

As described above, in the precursor lens in which the curvature of the curve of the ridge line is largest in the vicinity of the center of the vertical width of the lens shape, the curve becomes gentler with increasing distance upward and downward from the vicinity of the center of the lens shape, and the ridge line extends not to the inside of the lens use region of the lens shape but to the outside of the lens shape. That is, in the precursor lens in which a horizontally long lens shape is set, at a position near the ear side away from the lens center, the outside of the lens use region can be widely chamfered, so that the lens gives less sense of strangeness when seen by a third person.

The "lens base material" is a transparent block body made of glass or a resin material, and generally, either the front or rear surface is set as a machining surface and cut or ground with a machining tool to manufacture the precursor lens.

The "precursor lens" is a lens with a circular or elliptic outer circumference which is called a "round lens" as an industrial term and the diopter of which is set for a user, and is a lens before being machined into a lens shape corresponding to a lens frame shape selected by a user.

The "machining tool" is preferably, for example, an NC lathe machine, a CAD/CAM device, or the like. In these machines, it is preferable that machining data is input and machining is performed by controlling a computer by a program.

When manufacturing the precursor lens by machining a lens base material, the machining tool is moved relative to the lens base material so as to approach or move away from a rotation center of the lens base material. This movement is concentric. The concentric trajectory is a trajectory of one turn of an ended spiral as a whole, and is almost circular. On the other hand, a boundary line between the first shape and the second shape does not always match the concentric trajectory of the machining tool, so that the machining tool greatly moves back and forth when crossing the boundary line.

The "lens shape" is an industrial term of a shape of a lens to be fitted in a lens frame, and is a shape to be machined according to a frame. Here, the lens shape is shape data set as a lens position to be required in the future on the lens rear surface.

The "lens use region" is a region inside the lens shape, and is a portion except for a region that is near the lens shape outer edge and out of reach of light from a diagonal direction and does not function as a lens. This region is not constant but variable depending on the lens diopter power and the lens shape although it is disposed at the outer edge of the lens shape. For example, at a portion near the eye inside the lens frame, the region has a distance of 0.5 mm or less. On the other hand, at a portion with high power distant from the eye inside the lens frame (for example, on the ear side end), the distance may become approximately 3 mm.

The "concave shape (first shape) capable of exhibiting optical performance" is a shape that can exhibit user-specific power as a lens with negative power in the present invention. Astigmatic power may be provided or a progressive power surface for presbyopia may be formed. A basic shape of a lens for eyeglasses is a meniscus lens in many cases, so that in this case, the front surface is a convex surface and the rear surface is a concave surface. The front surface may be formed to be a flat surface. Also in this case, the rear surface is a concave surface.

In the "second shape," the ridge line is a curve not concave outward inside on the ear side at an outer side of the lens use region. That is, the ridge line consists of a curve formed of convex curved lines and straight lines. In the present invention, a straight line means a curve with a curvature of 0. The ridge line must be continuous at least on the ear side inside the lens shape, but does not have to be continuous over the entire region of the lens base material. For example, the ridge line may be combined with the first shape so as to be discontinued at upper and lower positions of the lens shape.

The curvature of the curve is set so as to become largest in the vicinity of the center of the vertical width of the lens shape. This means that the ridge line consists of a curve in which the curvature changes with the peak in the vicinity of the center of the vertical width of the lens shape inside the lens shape on the ear side. Therefore, a shape consisting of only a constant curvature (for example, a portion of an arc) that does not have the concept of "becoming largest" is not included. The vicinity of the center of the vertical width of the lens shape is preferably a region including an eye point when the eye point is present in the vicinity of the center of the vertical width.

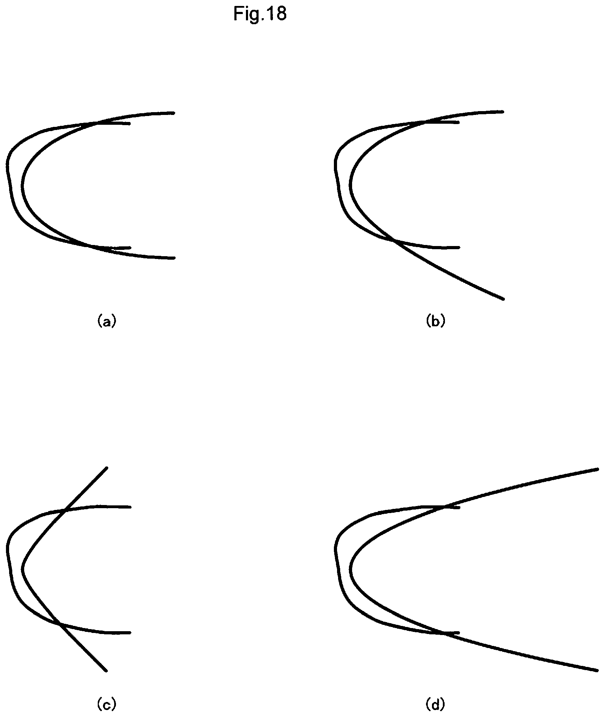

The curve with a curvature that becomes largest in the vicinity of the center of the vertical width of the lens shape may be a free curve, or may be a shape like, as a simple example, a portion of an ellipse, a portion of a parabola, or a portion of a hyperbola as illustrated in Figs. 18 (a) to 18 (d) . Fig. 18(a) illustrates an example in which an end of a long diameter of an ellipse is disposed in the vicinity of the center of the vertical width of the lens shape. The shape is vertically mirror symmetric about a position where the curvature of the curve is largest. Fig. 18(b) illustrates a case where the curvature of the curve at a lower side of the end position of the long diameter of the ellipse in Fig. 18 (a) is set to be small (that is, upper and lower extending portions have different curvatures). This shape is not mirror symmetric unlike the shape in Fig. 18(a). Fig. 18(c) illustrates an example of a curve of a hyperbola reaching an extreme in the vicinity of the center of the vertical width of the lens shape. Fig. 18 (d) illustrates an example of a curve of a parabola (quadratic curve) reaching an extreme in the vicinity of the center of the vertical width of the lens shape. Both of Figs. 18(c) and 18(d) illustrate shapes vertically mirror symmetric about extremes, however, they may be made asymmetric. In addition, these curved shapes may be combined. Each of these curved shapes has a shape extended along upper and lower edges of the lens shape near the upper and lower sides of the lens shape.

The ridge line crosses a virtual contour of the lens shape and protrudes to be convex on the lens rear surface. In a sectional shape of the ridge line, at least inside the lens shape, the thickness gradually decreases from the ridge line toward the lens rim. In this way, by gradually decreasing the thickness from the ridge line toward the lens rim, the non-use region can be made thin. The ridge line may be made clear also in a portion not included in the inside of the lens shape, or conversely, the ridge line can be made unclear by making its vertex extremely smooth (with a large gentle roundness).

The ridge line three-dimensionally protrudes to become convex on the lens rear surface, and in this case, a portion projecting to the non-use region from the lens use region is preferably rounded. As the thickest portion of the lens is round, a specific portion does not become conspicuous, so that the appearance has an aesthetic sense. When the diopter power differs between the left side and the right side of the eye, any complaints about a difference in position between left and right ridge lines are solved because the ridge line is unclear.

However, there is a possibility that a ridge line with an angle (corner) provides a sense of stylishness in a subjective way. When the ridge line is rounded, it becomes difficult to know the positional relationship between the ridge line and the lens shape end portion, however, when the ridge line becomes angular, an advantage that distances (positional relationships) to the ear-side and nose-side lens shape ends become clear after lens machining, is obtained.

In addition, machining to make the curvature of the curve largest in the vicinity of the center of the vertical width on the ear side inside the lens shape is meaningful in terms of lens machining. For giving a description in a comprehensible way, an opposite case where the curvature of the curve becomes smallest in the vicinity of the center of the vertical width on the ear side inside the lens shape will be described as a comparative example.

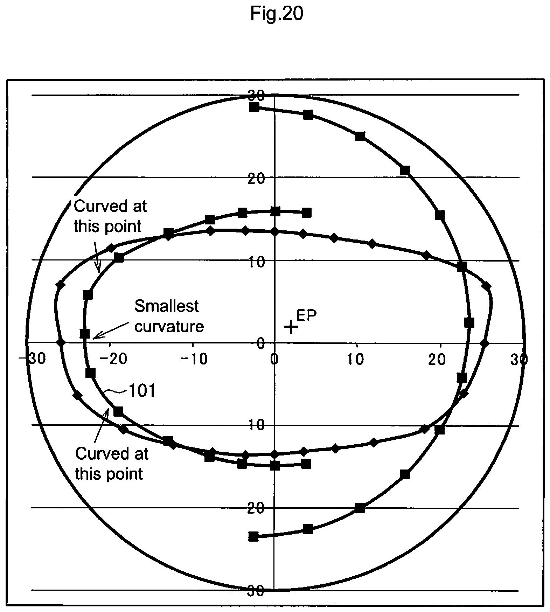

As illustrated in Fig. 20, a ridge line 101 consisting of a curve with a curvature that becomes smallest in the vicinity of the center of the vertical width on the ear side inside the lens shape is considered. The ridge line 101 is curved (increased in curvature) along the lens shape at upper and lower positions on the ear side inside the lens shape so that regions to be chamfered are secured inside the lens shape. When the ridge line has this curve, a crossing angle between the lens shape and the ridge line becomes shallow. Then, a slight machining position shift causes a great deviation of the shape of the edge of the lens shape from a planned shape. In addition, the machining tool that machines the lens moves in a circle, so that in such a shape, a portion where a crossing angle between the trajectory of the machining tool and the ridge line 101 is deep (crossing angle becomes close to a right angle) is formed. In this case, the machining tool moves at a deep angle at the boundary between the outer side of the ridge line 101 and the inner side of the ridge line 101, and coordinates of the machining tool in the advancing and retreating direction change to rapidly contact and separate from the lens surface in a shorter time. That is, acceleration in machining of the machining tool increases, and this causes an increase in load on a motor that drives the machining tool, and this is not good.

Definitions of these terms are the same in the following means.

The gist of a second means resides in that a shape (hereinafter, referred to as a third shape) in which the ridge line has a curved shape not concave outward at a position inside or outside the lens shape on a nose side of the lens shape at an outer side of the lens use region, and in which the thickness gradually decreases from the ridge line toward the lens rim inside the lens shape, is combined with the first shape.

Accordingly, in a precursor lens in which a horizontally long lens shape is set, chamfering can also be performed at a position near the nose side away from the lens center. In this way, by chamfering the position near the nose side, a problem in which the lens becomes thick and comes into contact with the nose can be solved. Based on the description "a position inside or outside the lens shape on the nose side of the lens shape," this curved shape includes the case where it is not inside but outside the lens shape.

The gist of a third means resides in that a curvature of a curve of the ridge line in the vicinity of the center of the vertical width of the lens shape on the nose side is set to be smaller than a curvature of a curve of the ridge line in the vicinity of the center of the vertical width of the lens shape on the ear side.

From the viewpoint of an aesthetic appearance of the lens as seen by a third person, chamfering in a range as wide as possible is preferable on the ear side. However, on the nose side, the lens is not seen by a third person, and when chamfering is performed, the user's face may appear visually distorted when seen by a third person through the chamfered surface. Therefore, by setting the curvature of the curve of the ridge line in the vicinity of the center of the vertical width to be smaller than that on the ear side, a range not as wide as the range on the ear side is chamfered. The curvature of the curve of the ridge line on the nose side is preferably set to a minimum value over the entire ridge line.

The gist of a fourth means resides in that the ridge line of the second shape and the ridge line of the third shape are not connected.

The ridge line of the second shape and the ridge line of the third shape, that is, the ridge line on the ear side and the ridge line on the nose side are not connected to each other, but respectively form curved shapes independently of each other. In this case, although machining is troublesome, one ridge line is not constrained by the curved shape of the other ridge line, and the shapes of the respective ridge lines are given allowances, so that the ridge lines become adaptable to various chamfering processes on the ear side and the nose side.

The gist of a fifth means resides in that the ridge line of the second shape and the ridge line of the third shape are connected in a ring shape, and the ridge line is disposed outside the lens shape at upper and lower sides of the lens shape.

Here, when the ridge line is not in a ring shape, while the trajectory of the machining tool turns one round in a plane with respect to the lens precursor body, the number of changes in orientation in the advancing and retreating direction (direction of contacting and separating from the lens surface) increases and causes an increase in load on the motor that drives the machining tool in the advancing and retreating direction, so that machining becomes difficult. According to this, as compared with the case where the ridge line is not in a ring shape, the lens surface is easily machined.

"Vertical" means vertical in a state where an eyeglasses wearer wears eyeglasses using a frame of the lens shape described above is in a natural posture (a state where the wearer faces front while directing the top of the head upward) .

The gist of a sixth means resides in that a precursor lens with negative power for eyeglasses is obtained by rotating a supported lens base material in a circumferential direction, placing a machining tool at a rear surface side of the lens base material, bringing the machining tool into contact with the rear surface of the lens base material by advancing the machining tool relative to the lens base material toward the lens base material and causing the machining tool to perform machining concentrically by a predetermined sag amount at the contact position along with the rotation, and machining the rear surface of the lens base material into a three-dimensional surface shape by moving the machining tool relative to the lens base material so as to approach or move away from a rotation center of the lens base material, wherein a lens shape longer in the horizontal direction than in the vertical direction is set on a lens rear surface side, and on the rear surface, a concave shape (hereinafter, referred to as a first shape) capable of exhibiting optical performance as a lens with negative power prescribed for a wearer is set, and a shape (hereinafter, referred to as a second shape) in which a ridge line is formed to have a curved shape not concave outward inside on the ear side and the nose side of the lens shape at an outer side of a lens use region, and in which the thickness gradually decreases from the ridge line toward a lens rim inside the lens shape, is combined with the first shape, and when comparing mean curvatures of curves of the ridge line passing through the ear side of the lens shape and the ridge line passing through the nose side, the curvature of the curve of the ridge line on the nose side is smaller than the curvature of the curve of the ridge line on the ear side.

Accordingly, in the precursor lens in which a horizontally long lens shape is set, chamfering can be performed particularly for each of the positions near the ear side and near the nose side away from a lens center. On the ear side, chamfering in a range as wide as possible is preferable from the viewpoint of an aesthetic appearance of the lens as seen by a third person. However, on the nose side, although the lens is not seen by a third person, when chamfering is performed, the user's face may appear visually distorted when seen by a third person through the chamfered surface. Therefore, according to the configuration described above, while the ear side is chamfered in a wide range, the nose side is chamfered not so widely.

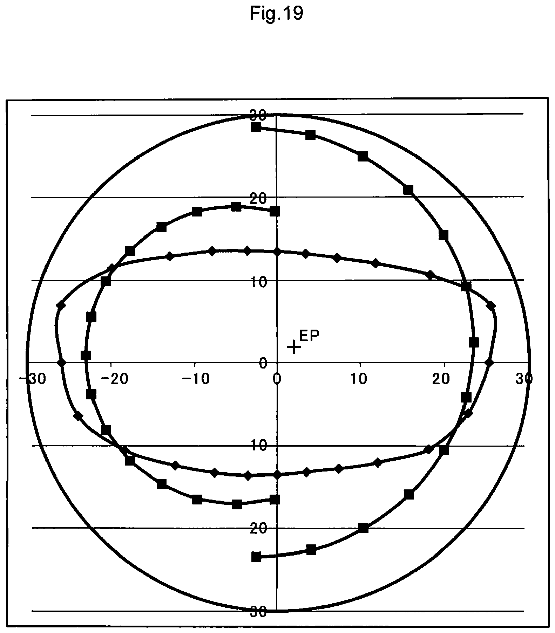

Based on Fig. 19, relationships between the curvatures of the curves of the ridge lines near the ear side and near the nose side and chamfering regions will be described. In Fig. 19, for giving a description in a comprehensible way, the ridge line has an arc shape with a constant curvature as an example.

Inside the lens shape, when the curvature of the curve of the ridge line near the ear side is large, the ridge line gradually curves to the geometric center side near the upper and lower sides of the lens shape, and areas outside the ridge line at upper and lower positions near the ear side increase. Therefore, regions capable of being chamfered increase. On the other hand, inside the lens shape, the curvature of the curve of the ridge line near the nose side is small, so that regions outside the ridge line are small.

The gist of a seventh means resides in that the curvature of the curve of the ridge line on the ear side is set to become largest in the vicinity of the center of the vertical width of the lens shape.

The shape in which the curvature of the curve of the ridge line on the ear side becomes largest in the vicinity of the center of the vertical width of the lens shape enables chamfering in a wide range outside the lens use region at a position near the ear side in a precursor lens in which a horizontally long lens shape is set, so that the lens gives less sense of strangeness when seen by a third person.

The gist of an eighth means resides in that, in the second shape, the ridge line disposed on the ear side and the ridge line disposed on the nose side are not connected.

Accordingly, one ridge line is not constrained by the curved shape of the other ridge line as in the fourth means described above, and the shapes of the respective ridge lines are given allowances, so that the ridge lines become adaptable to various chamfering processes on the ear side and the nose side.

The gist of a ninth means resides in that the ridge line of the second shape is formed into a ring shape, and the ridge line is disposed outside the lens shape at upper and lower sides of the lens shape.

Accordingly, as in the fifth means described above, the lens surface is easily machined as compared with a case where the ridge line is not in a ring shape.

The gist of a tenth means resides in that a coordinate system centered at a geometric center of the lens base material is assumed, and when a horizontal direction on the ear side is set as 0 degrees in the coordinate system, the ridge line crosses a contour of the lens shape in an upward or downward direction and in an angle region from 30 to 60 degrees.

When the position where the ridge line crosses the contour of the lens shape is excessively near the ear side of the lens shape, chamfering in a wide range is impossible. On the other hand, when the ridge line crosses the contour at a position at an excessively inner side of the lens shape, a problem occurs in the shape of the ridge line or the ridge line enters the inside of the lens use region. Therefore, a proper crossing position that the ridge line passes is limited as an angle.

The gist of an eleventh means resides in that the curved shape of the ridge line is optimized on the condition that a sum of squares of second-order differentials of lengths of line segments from a center point or a reference point near the center point to respective points on the ridge line is minimized.

Accordingly, the curved shape of the ridge line can be set to a smooth curved shape without setting a large number of passage points.

The gist of a twelfth means resides in that the curve of the ridge line is shaped not to be concave outward.

This means that not only the lens shape but also the curved shape of the ridge line is convex or straight also outside the lens shape. Accordingly, a precursor lens which is easily chamfered and excellent in design without unnaturalness can be provided.

The gist of a thirteenth means resides in that in the second shape, the ridge line is shaped so that the thickness gradually decreases from the ridge line toward the lens rim also outside the lens shape.

Accordingly, a precursor lens light in weight and not thick from which an unnecessary portion on a lens rim has been cut, can be provided while remaining in the state of the precursor lens. At this time, it is preferable that machining is performed so as not to excessively thin the lens and form a through hole penetrating to the front and rear surfaces.

The gist of a fourteenth means resides in that a lens for eyeglasses is obtained by machining the precursor lens with negative power for eyeglasses described in any of the first to thirteenth means into the lens shape.

Accordingly, a lens with negative power for eyeglasses corresponding to a horizontally long lens shape arbitrarily designed is obtained. The lens with negative power for eyeglasses may be, for example, single-vision, a bifocal lens accompanied by a small lens, or a progressive power lens.

The gist of a fifteenth means resides in that a method for machining a precursor lens with negative power for eyeglasses includes rotating a supported lens base material in a circumferential direction, placing a machining tool at a rear surface side of the lens base material, bringing the machining tool into contact with the rear surface of the lens base material by advancing the machining tool relative to the lens base material toward the lens base material and causing the machining tool to perform machining concentrically by a predetermined sag amount at the contact position along with the rotation, and machining the rear surface of the lens base material into a three-dimensional surface shape by moving the machining tool relative to the lens base material so as to approach or move away from a rotation center of the lens base material, wherein a lens shape longer in the horizontal direction than in the vertical direction is set on a lens rear surface side, and on the rear surface of the lens base material, a surface formed by combining a concave shape (hereinafter, referred to as a first shape) capable of exhibiting optical performance as a lens with negative power prescribed for a wearer, and a shape (hereinafter, referred to as a second shape) in which a ridge line is formed to have a curved shape not concave outward inside on the ear side of the lens shape at an outer side of a lens use region, a curvature of the curve of the ridge line becomes largest in the vicinity of a center of a vertical width of the lens shape, and in which the thickness gradually decreases from the ridge line toward a lens rim inside the lens shape, is machined.

The details of this means are specified based on the first means from a methodological point of view.

In this way, when a precursor lens with a ridge line having a curve the curvature of which becomes largest in the vicinity of a center of a vertical width of a lens shape is machined, the curve becomes gentler with increasing distance upward and downward from the vicinity of the center of the lens shape, and the ridge line extends not to the inside of the lens use region of the lens shape but to the outside of the lens shape. That is, when machining a precursor lens in which a horizontally long lens shape is set, chamfering can be performed on a wide range outside the lens use region at a position near the ear side away from the lens center, so that the lens gives less sense of strangeness when seen by a third person.

The gist of a sixteenth means resides in that a curved shape (hereinafter, referred to as a third shape) in which the ridge line is not concave outward inside the nose side of the lens shape at an outer side of the lens use region, and in which the thickness gradually decreases from the ridge line toward the lens rim inside the lens shape, is combined with the first shape.

By this machining, in a precursor lens in which a horizontally long lens shape is set, chamfering can also be performed on a position near the nose side away from the lens center. By chamfering the position near the nose side in this way, a problem in which the lens becomes thick and comes into contact with the nose can be solved.

The gist of a seventeenth means resides in that a curvature of a curve of the ridge line in the vicinity of the center of the vertical width of the lens shape on the nose side is set to be smaller than a curvature of a curve of the ridge line in the vicinity of the center of the vertical width of the lens shape on the ear side.

On the ear side, machining in a range as wide as possible is preferable in terms of an aesthetic appearance when the lens is seen by a third person. On the nose side, although the thickness of the edge of the lens is not seen by a third person, chamfering improves safety when considering the possibility of contact of the lens with the nose. However, excessive chamfering may cause a user's face to appear visually distorted when seen by a third person through the chamfered surface. Therefore, by performing machining so that the curvature of the curve of the ridge line in the vicinity of the center of the vertical width becomes smaller than that on the ear side, chamfering is performed in a range not as wide as the range on the ear side. The curvature of the curve of the ridge line on the nose side is preferably set to a minimum value over the entire ridge line.

The gist of an eighteenth means resides in that a method for machining a precursor lens with negative power for eyeglasses includes rotating a supported lens base material in a circumferential direction, placing a machining tool at a rear surface side of the lens base material, bringing the machining tool into contact with the rear surface of the lens base material by advancing the machining tool relative to the lens base material toward the lens base material and causing the machining tool to perform machining concentrically by a predetermined sag amount at the contact position along with the rotation, and machining the rear surface of the lens base material into a three-dimensional surface shape by moving the machining tool relative to the lens base material so as to approach or move away from a rotation center of the lens base material, wherein a lens shape longer in the horizontal direction than in the vertical direction is set on a lens rear surface side, and on the rear surface of the lens base material, a concave shape (hereinafter, referred to as a first shape) capable of exhibiting optical performance as a lens with negative power prescribed for a wearer, and a shape (hereinafter, referred to as a second shape) in which a ridge line is formed to have a curved shape not concave outward inside on the ear side and the nose side of the lens shape at an outer side of a lens use region, and in which the thickness gradually decreases from the ridge line toward a lens rim inside the lens shape, are combined, and at the time of the combination, when comparing mean curvatures of curves of the ridge line passing through the ear side of the lens shape and the ridge line passing through the nose side, the curvature of the curve of the ridge line on the nose side is set to be smaller than the curvature of the curve of the ridge line on the ear side.

The details of this means are specified based on the sixth means from a methodological point of view.

In a precursor lens in which a horizontally long lens shape is set, on the ear side, chamfering in a range as wide as possible is preferable from the viewpoint of an aesthetic appearance of the lens as seen by a third person. However, on the nose side, although the lens is not seen by a third person, when chamfering is performed, the user's face may appear visually distorted when seen by a third person through the chamfered surface. By machining as described above, while the ear side is chamfered in a wide range, the nose side is chamfered not so widely.

The gist of a nineteenth means resides in that machining is performed so that the curvature of the curve of the ridge line on the ear side becomes largest in the vicinity of the center of the vertical width of the lens shape.

The shape in which the curvature of the curve of the ridge line on the ear side becomes largest in the vicinity of the center of the vertical width of the lens shape is advantageous when chamfering a wide range on the ear side of the lens shape as described with reference to Fig. 19.

The gist of a twentieth means resides in that the curved shape of the ridge line is optimized on the condition that a sum of squares of second-order differentials of lengths of line segments from a center point or a reference point near the center point to respective points on the ridge line is minimized.

Accordingly, the curved shape of the ridge line can be set to a smooth curved shape without setting a large number of passage points.

The inventions of the first to twentieth means can be arbitrarily combined. An arbitrary component of each invention of the first to twentieth means may be extracted and combined with other components.

Advantageous Effects of Invention

According to the present invention, in a precursor lens in which a horizontally long lens shape is set, at a position near the ear side away from a lens center, chamfering can be performed in a wide range outside the lens use region in particular, so that the lens gives less sense of strangeness when seen by a third person.

Brief Description of Drawings

Fig. 1 is a descriptive view describing a disposed state of a lens shape and a ridge line to be set on a rear surface side of a round lens of Example 1 of the present invention.
Fig. 2 is a graph describing a curvature distribution of the entire circumference of the ridge line of the round lens in Fig. 1.
Fig. 3 is a descriptive view describing a disposed state of a lens shape and a ridge line to be set on a rear surface side of a round lens of Example 2 of the present invention.
Fig. 4 is a graph describing a curvature distribution of the entire circumference of the ridge line of the round lens in Fig. 3.
Fig. 5 is a descriptive view describing a disposed state of a lens shape and a ridge line to be set on a rear surface side of a round lens of a comparative example.
Fig. 6 is a graph describing a curvature distribution of the entire circumference of the ridge line of the round lens in Fig. 5.
Fig. 7 is a partially enlarged sectional view of an outer side of the vicinity of a boundary line in the line A-A direction in Fig. 3.
Fig. 8 is a descriptive view describing a round lens having a preferable lens shape and ridge line.
Fig. 9 is a descriptive view describing a round lens having an undesirable lens shape and ridge line.
Figs. 10 are descriptive views illustrating, as numerical values, differences in thickness near edges of lens shapes inside lens shapes in (a) a normal round lens not chamfered, (b) a chamfered round lens as a comparative example, and (c) a round lens of Example 2.
Figs. 11 are side views of (a) a normal round lens not chamfered, (b) a chamfered round lens as a comparative example, and (c) a round lens of Example 2, respectively viewed from the ear side.
Fig. 12 is a schematic descriptive view of an NC lathe machine to be used in embodiments.
Fig. 13 is a descriptive view describing a positional relationship between a turning tool and a material block.
Fig. 14 is a partially cut-away side view of a material block cut away at a central position in a diametrical direction.
Fig. 15 is a descriptive view describing a ridge line to be formed on a rear surface of a round lens and machining in front of and behind the ridge line.
Fig. 16 is a descriptive view describing spline interpolation.
Fig. 17 is a descriptive view for describing calculation of a curvature of a ridge line.
Figs. 18(a) to 18(d) are descriptive views describing curved shapes of ridge lines of the present invention.
Fig. 19 is a descriptive view of a disposed state of a lens shape and a ridge line to be set on a rear surface side of a round lens, for describing a difference in curvature between curves of ridge lines near the ear side and near the nose side.
Fig. 20 is a descriptive view in which a curvature of a curve of a ridge line is set to become smallest in the vicinity of a center of a vertical width on the ear side inside a lens shape in a disposed state of the lens shape and the ridge line to be set on a rear surface side of a round lens for describing a difference from the present invention.

Description of Embodiments

Hereinafter, detailed examples of the present invention will be described based on the drawings.

(Embodiment)

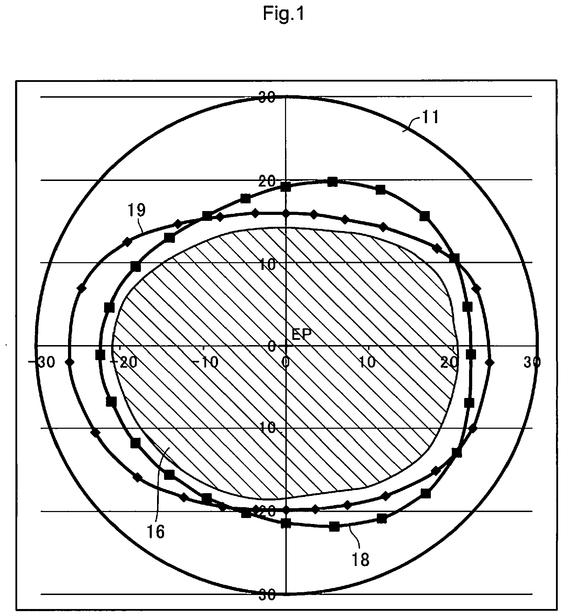

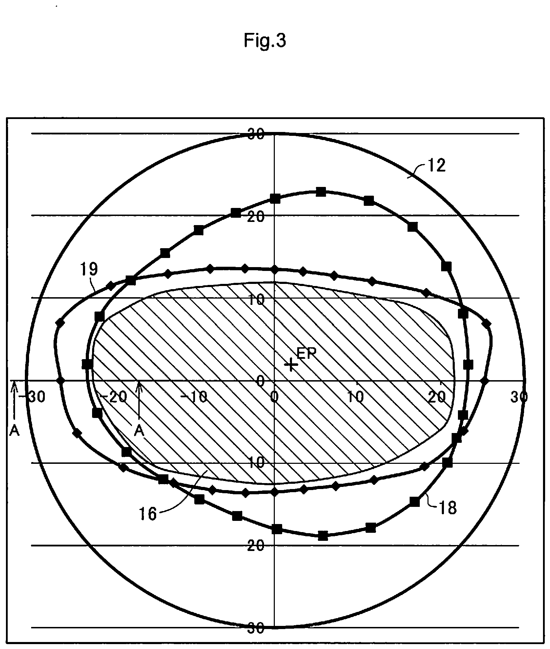

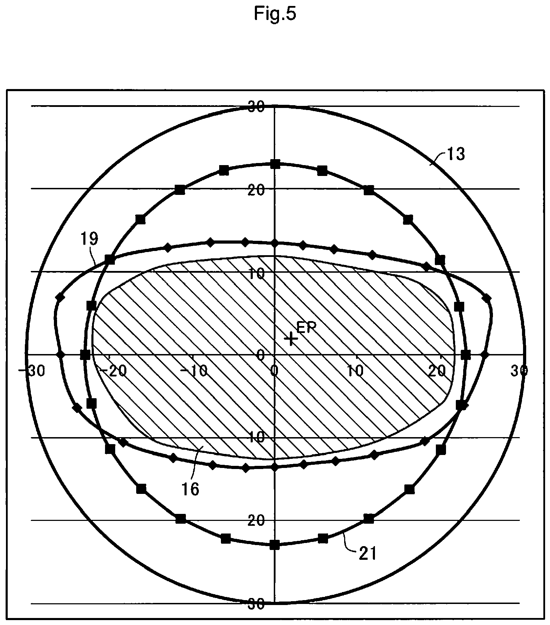

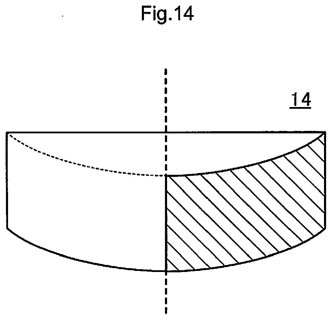

Fig. 1 illustrates a round lens 11 as a precursor lens of Example 1, and Fig. 3 illustrates a round lens 12 as a precursor lens of Example 2. Fig. 5 illustrates a round lens 13 as a precursor lens of a comparative example. Each of the round lenses 11 to 13 is obtained by cutting or grinding with an NC (Numerical Control) lathe machine 41 as described later a rear surface side of a material block 14 as a cylindrical lens base material having a sufficient thickness, which is a so-called " (semi-) semi-finished blank" as illustrated in Fig. 14.
The material block 14 in the present embodiment is, for example, a cylindrical body with a material refractive index of 1.70 and a radius of 70 mm, and has a front surface formed to be convex at a predetermined curvature, and a rear surface formed to be concave at a predetermined curvature. When being machined into the round lens 11, the front surface is left as a front surface with the same curvature. In the present embodiment, each of the round lenses 11 to 13 is manufactured by inputting shape data of the material block 14 into the NC lathe machine 41, and cutting the rear surface side of the material block 14 based on synthetic machining data obtained by synthesizing a first machining data for forming a user-specific lens diopter power and a second machining data for cutting an unnecessary portion on a lens circumference to be machined based on the first machining data. At the end of manufacturing, smoothing and polishing are performed to complete each of the round lenses 11 to 13 with smoothly machined surfaces. A surface shape to be machined based on the first machining data is defined as a first shape, and a surface shape to be machined based on the second machining data is defined as a second shape or a third shape.

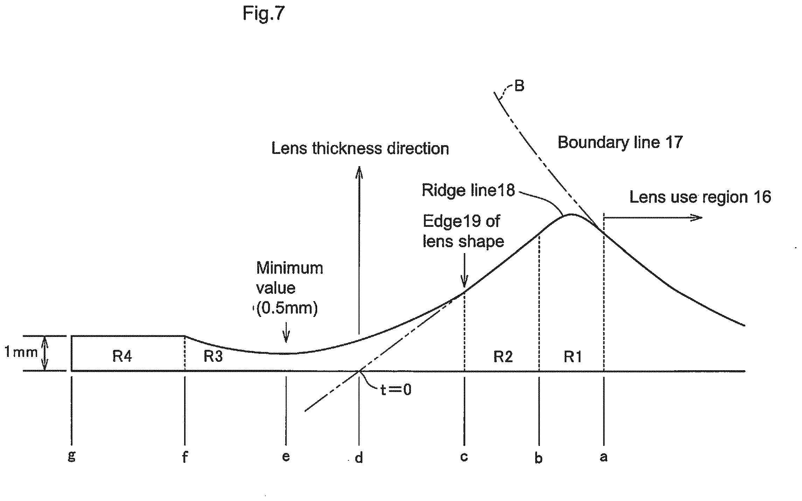

Based on Fig. 7, a three-dimensional shape (stereoscopic shape) of the rear surface of the round lens 12 of Example 2 will be described by way of example. Three-dimensional shapes of the round lens 11 of Example 1 and the round lens 13 of the comparative example are basically the same as that of the round lens 12, so that a constituent portion common to the round lens 12 is provided with the same reference number, and detailed description thereof is omitted. The round lens 13 of the comparative example has a ridge line 21, and the ridge line is designed by the same method as in Examples .

Concerning a distance from a lens center to a ridge line 18, due to an irregular shape of the ridge line 18, a sectional shape from the center of the round lens 12 toward the edge (that is, in a radial direction) varies over the entire circumference of the rear surface of the round lens 12. In Fig. 7, as an example, the shape is described based on a partially enlarged sectional view of an outer side of the vicinity of the ridge line 18 in the line A-A direction in Fig. 3. As illustrated in Fig. 7, on the rear surface of the round lens 12, a lens use region 16, a boundary line 17, the ridge line 18, and an edge 19 of a lens shape are arranged in order from the central direction. These do not appear as actual line segments on the lens surface. In Fig. 7, the curve of the front surface side is canceled and illustrated to be straight (flat surface).

The three-dimensional shape of the round lens 12 will be described in greater detail.

As illustrated in Fig. 7, the lens use region 16 consists of only the first shape. On the assumption that the first shape is not combined with the second shape (or the third shape), the first shape is extended in a curve like a virtual line B to the lens outer side from the lens use region 16, so that the lens edge becomes extremely thick. At an outer side of the lens use region 16, a surface combined with the second shape or the third shape is formed, so that the lens edge does not become thick unlike the virtual line B.

At the outer side of the lens use region 16, that is, at an outer side of the boundary line 17, a curved surface that peaks at the ridge line 18 and is gently curved outward is formed. The lens use region 16 is a region that can function substantially as a lens when the round lens 12 is cut to have the outline of the lens shape and put into a frame. The lens shape is surrounded by the frame, so that light from a diagonal outer side is blocked by the frame in the region close to the frame and does not enter the eye. Therefore, regions of approximately 0.3 to 0.5 mm at the upper side and the lower side and approximately 3 to 5 mm on the ear side and the nose side of the lens shape from the edge 19 of the lens shape are not included in the lens use region 16 although they are inside the edge 19 of the lens shape. The ear side and the nose side range in thickness, and when the negative power of the lens is extremely high and the lens shape is large, the thickness may become 10 mm or more. The boundary line 17 crossing the edge 19 of the lens shape at positions near the nose side and the ear side passes through a portion out of the lens use region 16 inside the edge 19 of the lens shape.

As illustrated in Fig. 3, etc., in a planar view from the lens rear surface, the ridge line 18 is formed into an irregular ring shape. The lens shape of the round lens 12 of Example 2 is a horizontally long shape angular on the nose side and the ear side. The ridge line 18 passes through the inside of the lens shape and crosses the edge 19 of the lens shape at positions near the ear side and the nose side of the lens shape (actually, the edge 19 of the lens shape). A relationship between the ridge line 18 and the edge 19 of the lens shape will be described later.

The boundary line 17 is present at a boundary position (hereinafter, referred to as a position a) between a lens use region 15 of the first shape and a region (lens non-use region) outside the lens use region. This portion is a portion where the first shape and the second shape are connected continuously, and these shapes are smoothly connected without a level difference. Therefore, the position of the boundary line 17 from the actual appearance is not known. A region R1 consisting of a gentle curve whose cross section is convex upward with respect to the ridge line 18 is first formed on the outer side of the boundary line 17. In the present embodiment, the region R1 has a width of about 2 mm.

Outside the region R1, a region R2 having a cross section consisting of a straight line of a linear function is formed. In the present embodiment, the slope of this region is set to 22.5 degrees as half of 45 degrees. A linear function at this angle (at the slope, a temporary lens thickness before thickness compensation) is expressed as:

$$g(t) = 0.4142 \cdot t$$

Here, a position of t = 0 is a position where the thickness of the slope expressed by the function of g(t) becomes 0, and is set as an origin of g(t). This position is defined as a position d. t is defined as a distance (mm) that takes a positive value towards the lens center.

The region R2 is smoothly connected to the region R1 at a position b. In the present embodiment, the region R2 has a width of about 2 mm. Outside the region R2, a region R3 is formed. The region R2 and the region R3 are smoothly connected, and the connecting position (this position is defined as a position c) is the edge 19 of the lens shape in this sectional direction. The region R3 consists of a gentle curve convex (thinned) downward of a cubic function, and takes a minimum value at a position e, which is the thinnest (lowest) position of the round lens 12. The cubic function of the thickness to be added to the slope can be expressed as follows.

$$f(t) = at^3 + bt^2 + ct + d$$

A detailed method for calculating the coefficients of f(t) will be described later. A distance from the position d to the position e is set to 5 mm in the present embodiment.

The region R3 becomes thin once and then becomes thick again, and is connected to a region R4 at a position f. In the present embodiment, the region R3 has a width of about 7 mm. The region R4 is a region consisting of a straight line extending horizontally, and reaching an outer circumferential edge position g of the round lens 12. The connection between the region R3 and the region R at the position f is discontinuous . The width of the region R4 varies depending on the position of the ridge line 18.

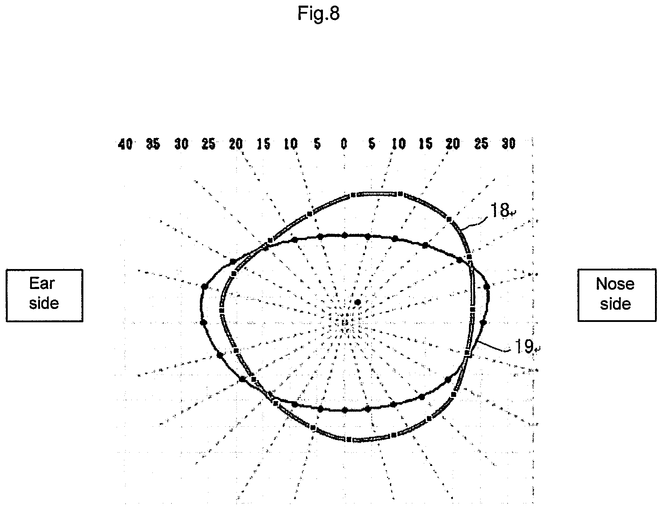

Next, the shape of the ridge line 18 will be described in detail based on Figs. 8 to 10.

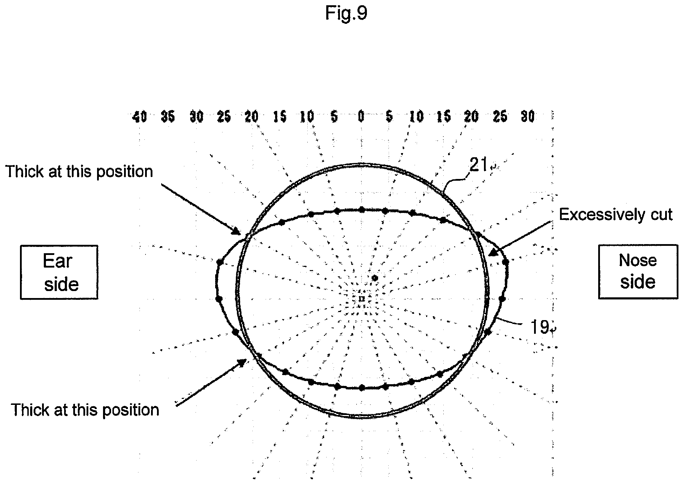

Fig. 8 is a view describing a "preferable ridge line" in the present invention describing a positional relationship of the ridge line with the lens shape. This corresponds to the round lens 12 of Example 2. Fig. 9 is a view of a round lens with an "undesirable ridge line" for comparison with the "preferable ridge line." This corresponds to the round lens 13 of the comparative example.

As illustrated in Fig. 8, the ridge line 18 is formed into a ring shape by a curve with a curvature not constant. The ridge line 18 consists of a curve always convex outward (that is, positive curve), and does not include a portion where the curve becomes concave (that is, negative curve) . The ridge line 18 crosses the edge 19 of the lens shape near the ear side and near the nose side inside the lens shape outside the lens use region 16. The ridge line 18 has a curvature that becomes largest at a curve convex outward in the vicinity of a center (in the vicinity of an eye point height) of a vertical width inside the lens shape on the ear side. The curvature is larger than that of the curve of the lens shape at the same height. The ridge line 18 gradually decreases in curvature toward the upper and lower sides of the lens shape, and becomes smaller in curvature than the curve of the lens shape, so that the ridge line 18 crosses the lens shape and extends to the outside of the lens shape. The ridge line 18 crosses the edge 19 of the lens shape at an angle of about 45 degrees at each of the upper and lower sides. The ridge line 18 crosses the edge 19 of the lens shape at an angle not so deep as to be orthogonal but comparatively shallow along the edge 19 of the lens shape. Due to this curved shape, in the round lens in Fig. 8, the ear side is to be widely chamfered. In addition, when the angle of the ridge line 18 becomes shallow near the upper and lower edges of the lens shape as described above, the ridge line 18 does not widely cross the concentric movement of the turning tool 40 during machining described later, so that a load is hardly applied in advancing and retreating of the turning tool 40.

Further, inside the lens shape on the nose side, the ridge line 18 consists of a curve having a curvature constant over almost the vertical width and convex outward. The curvature of this curve of the ridge line 18 passing near the nose side inside the lens shape is smallest over the entire ridge line 18, and the ridge line 18 crosses the lens shape substantially vertically. The ridge line 18 crosses the edge 19 of the lens shape at an angle of about 15 degrees at each of the upper and lower sides. The curvature of the ridge line 18 does not vary depending on the vertical direction of the lens shape, so that the crossing angle is deeper than that on the ear side. Due to this curved shape, the nose side of the round lens illustrated in Fig. 8 is not to be widely chamfered.

On the other hand, the undesirable ridge line 21 in Fig. 9 has a shape of a perfect circle with a constant curvature as a whole. The ridge line 21 with a constant curvature passes near the ear side and near the nose side.

Here, comparing Fig. 8 and Fig. 9, the curve of the ridge line 20 has a curvature always constant near the ear side inside the lens shape in Fig. 9 unlike in Fig. 8, so that, as for the ridge line 21, an outer region of the ridge line 20 does not widen in the vertical direction inside the lens shape unlike in Fig. 8. That is, chamfering is smaller than in the case illustrated in Fig. 8 showing the "preferable ridge line." As compared with the position where the ridge line 21 crosses the edge 19 of the lens shape in Fig. 9, the corresponding position in the round lens in Fig. 8 is chamfered and relatively thin.

On the other hand, in Fig. 9, the curve of the ridge line 21 near the nose side is larger in curvature than the curve of the ridge line 18 near the nose side in Fig. 8, so that chamfering is larger than in the case of Fig. 8 showing the "preferable ridge line."

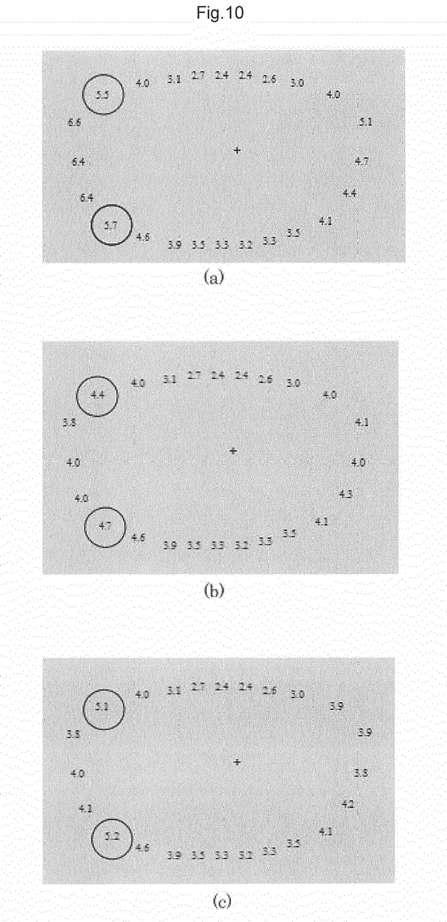

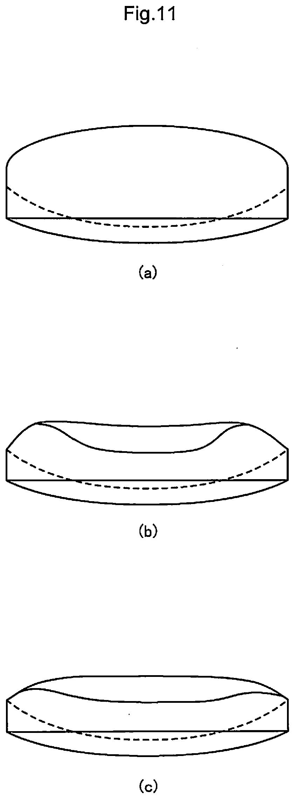

Figs. 10(a) to 10(c) illustrate, as numerical values, differences in thickness near the edges of the lens shapes inside the lens shapes in round lenses. Fig. 10 (a) illustrates a lens not chamfered at all (that is, a normal lens having only the first shape machined based on the first machining data) for comparison. Fig. 10(b) illustrates the round lens of Example 2 manufactured with the "preferable ridge line," and Fig. 10(c) illustrates a round lens as a comparative example manufactured with the "undesirable ridge line." Figs. 11(a) to 11(c) are side views of the round lenses corresponding to Figs. 10(a) to 10(c) as viewed from the ear side. The dashed line in each drawing represents a rear surface side curved shape in section along a geometric center of the round lens. As illustrated in Fig. 11(b), the round lens of Example 2 of the present invention is chamfered in a wide range and thinned near the ear side inside the lens shape as compared with the round lens of the comparative example in Fig. 11(c), and on the other hand, on the nose side, although the lens is chamfered, the chamfered range is not extremely wide.

A relationship between the lens shape and the ridge line in a specific round lens manufactured according to the embodiment described above will be described.

(1) Example 1

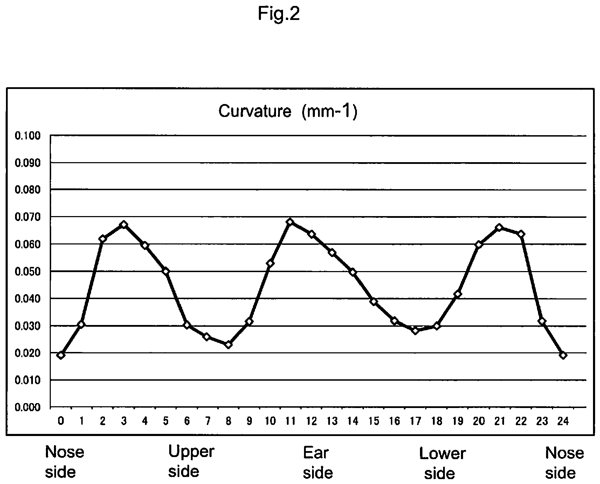

The round lens 11 of Example 1 illustrated in Fig. 1 is an example of a lens shape with a large height. In Example 1, an eye point EP matches a geometric center of the round lens 11. A ridge line 18 crossing an edge 19 of the lens shape is set to have a ring shape. Based on Fig. 2, the curvature of the ridge line 18 is more accurately analyzed. Fig. 2 is a line graph of curvatures at 24 points as references for designing a circumferential shape of the ridge line 18, and a point at a position slightly lower than a horizontal line passing through the geometric center on the nose side is set as "0" and positions of the 24 points are plotted counterclockwise. According to this graph, the curvature becomes largest (maximum) near the 12th point on the ridge line 18 on the inside near the ear side, and becomes smallest (minimum) near the 0th point and the 24th point on the inside near the nose side. Further, inside the lens shape, a mean curvature of the ridge line 18 near the nose side is smaller than a mean curvature of the ridge line 18 near the ear side.

In this Example 1, a distance from a rotation center of the lathe machine 21 to the ridge line is almost equal between the nose side and the ear side, and is vertically symmetrical, and this is advantageous in terms of machining. On the other hand, on the nose side, a distance between the lens shape and the edge of the round lens (a margin for lens shape machining) is large, so that a lens larger than an originally required size is manufactured, and this is disadvantageous in terms of cost of materials to be used and machining cost.

(2) Example 2

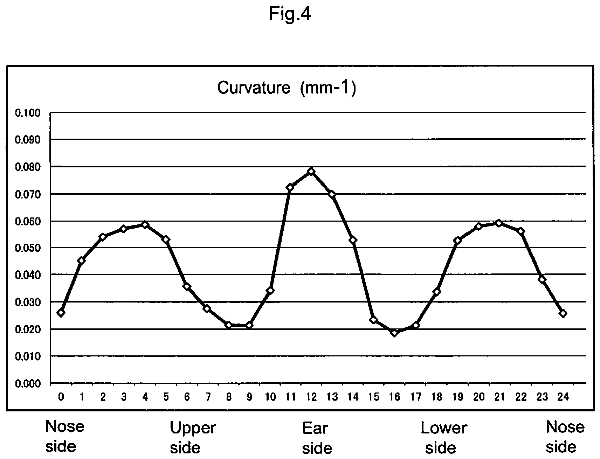

The round lens 12 of Example 2 illustrated in Fig. 3 is an example of a lens shape with a small height. In Example 1, the eye point EP is set at a position displaced by 2.0 mm toward the nose side and 2.0 mm upward from the geometric center of the round lens 12. As in Example 1, the ridge line 18 crossing the edge 19 of the lens shape is set to have a ring shape. Based on Fig. 4, the curvature of the ridge line 18 is more accurately analyzed. In Fig. 4, as in Fig. 2, positions of 24 points are plotted. According to this graph, the curvature becomes largest (maximum) near the 12th point on the ridge line 18 on the inside near the ear side, and becomes smallest (minimum) near the 9th point at an upper side and the 16th point at a lower side outside the lens shape. Curvatures at the 0th point and 24th point on the inside near the nose side are also smaller than the curvature near the ear side. Further, inside the lens shape, a mean curvature of the ridge line 18 near the nose side is smaller than a mean curvature of the ridge line 18 near the ear side.

In Example 2, the distance from the rotation center of the lathe to the ridge line is more uneven than in Example 1, and this is disadvantageous in terms of machining. On the other hand, a diameter of the lens to be manufactured is optimum.

(3) Comparative Example

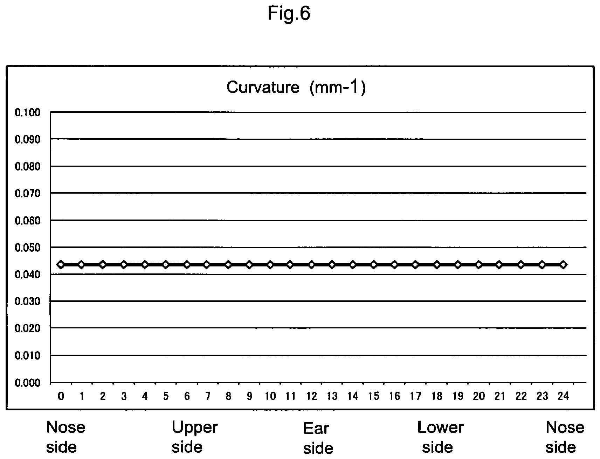

The round lens 13 of Example 3 illustrated in Fig. 5 has the same lens shape as in Example 2, and is an example in which the ridge line 18 has a shape of a perfect circle. Based on Fig. 6, the curvature of the ridge line 18 is more accurately analyzed. In Fig. 6, as in Fig. 2, positions of 24 points are plotted. In this example, the ridge line 18 has a shape of a perfect circle, and its curvature does not change but is constant. This lens is easily machined with a lathe, but is inferior to Examples 1 and 2 in terms of an aesthetic appearance. Further, inside the lens shape, at upper and lower portions on the ear side, the edge becomes thick. In addition, the nose side inside the lens shape (that is, the edge portion on the nose side) does not have to be as thin as the ear side, however, in this example, the nose side is excessively thin.

Next, a machining method to manufacture the round lenses 11 to 13 from the material block 14 will be described.

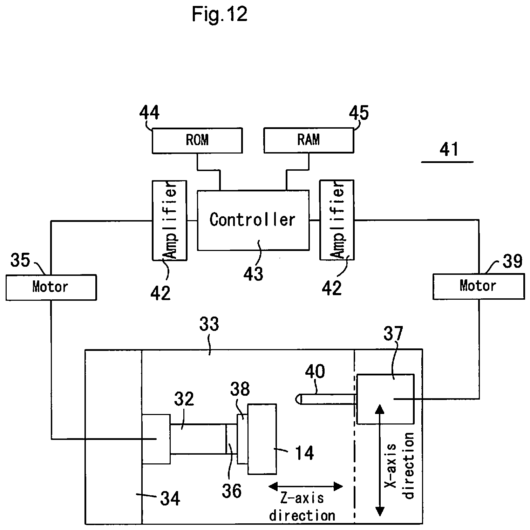

In the present embodiment, the material block 14 is machined by using, as machining equipment, an NC lathe machine 41 illustrated in Fig. 12. A main shaft 32 of the NC lathe machine 41 is attached rotatably to a faceplate 34 of a table 33. The main shaft 32 is extended parallel to the Z axis. The main shaft 32 is rotated by a main shaft rotary motor 35. A chuck portion 36 is formed on a tip end of the main shaft 32. To a convex surface side of the material block 14, a pad 38 with a joining portion is bonded in advance, and the material block 14 is fixed to the chuck portion 36 via the joining portion of the pad 38. An optical center O of the material block 14 matches a rotation center of the main shaft 32 in a state where the material block 14 is fixed to a tip end of the main shaft 32. At a position facing the main shaft 32, a tool rest 37 is placed. The tool rest 37 is movable in two directions of the X-axis and Z-axis directions by a plurality of tool rest driving motors 39. The X-axis direction is a direction of the tool rest 37 orthogonal to the left-right direction of the main shaft 32, and the Z-axis direction is a direction in which the tool rest 37 contacts and separates from the main shaft 32. To the chuck portion 36 of the tool rest 37, a turning tool 40 as a machining tool is removably attached. Motors 35 and 39 respectively consist of servo motors, and are respectively connected to a controller 43 via amplifiers 32. Fig. 12 is a simplified view, and components having no direct relation with the present invention are omitted.

The controller 43 is a control portion of the NC lathe machine 41 that consists of a CPU, and to the controller 43, a ROM 44 and a RAM 45 are connected. In the ROM 44, various programs such as a system program, an NC machining program, and an OS (Operation System) of the NC lathe machine 41 are stored. To the controller 43, an input operation unit consisting of a keyboard and a mouse, etc., and a monitor are connected.

In the RAM 45, product data, turning tool data, machining condition data, and machine data, etc., are stored.

The product data includes both of shape data of the material block 14 and first machining data and second machining data of the round lenses 11 to 13 to be manufactured. Since the type of the turning tool 40 to be used differs between rough machining and finish machining in the present embodiment, the turning tool data is specification data on the types and sizes of the turning tools 40 to be changed for each machining. The machining condition data is data such as a feed amount and a feed speed of the turning tool 40 per one turn. The machine data is specification data of machine members of the NC lathe machine 41, such as a positional relationship between the main shaft 32 and the tool rest 37 and a positional relationship of the chuck portion 36 with the tool rest 37. The controller 43 executes the NC machining program and controls the respective motors 35 and 38.

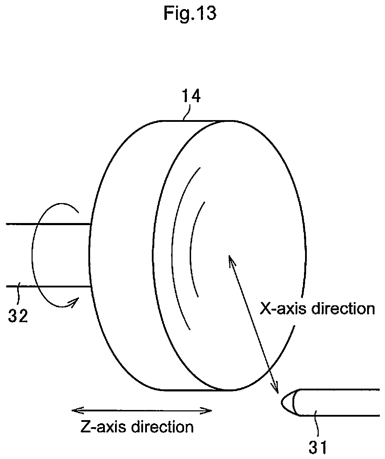

As illustrated in Fig. 13, the turning tool 40 of the NC lathe machine 41 performs a cutting operation for the rotating material block 14 so as to contact and separate from the material block 14 in the Z-axis direction (that is, moves back and forth) based on the synthesized first machining data and second machining data while moving from an outer side toward the center of the material block 14 (in the X-axis direction) . The turning tool 40 that has reached the center of the material block 14 temporarily moves away from the material block 14, and returns to an initial position outside the material block 14 and performs a next cutting operation again. The turning tool 40 cuts the material block 14 by a cutting amount of approximately 0.1 to 0.5 mm at a speed of, for example, 5 to 10 rotations per second. These values are changed as appropriate according to the type or settings of the NC lathe machine 41 or the current machining stage (for example, rough machining or finish machining, etc.).

In the cutting operation, the machining data set in the NC lathe machine 41 does not match the shape of the material block 14 at first, so that they may or may not come into contact, however, as machining progresses, the turning tool 40 cuts the entire rear surface of the material block 14 without omission into a shape corresponding to the machining data.

Here, the material block 14 is machined concentrically (actually, in a form as a portion of a spiral), and as described above, the boundary line 13 is not on the circumference, so that a trajectory of the turning tool 40 crosses the boundary line 13 many times during machining. At a position where the trajectory crosses the ridge line 18, the turning tool 40 gets over the ridge line 18 and advances to the inside or outside of the ridge line 18, and in the regions R1 to R3 at the outer side of the ridge line 18, the lens thickness rapidly decreases, so that the turning tool 40 is forced to rapidly move. The same applies in the opposite direction. In particular, as the crossing angle with the boundary line 13 becomes closer to orthogonal, the turning tool 40 advances at a more rapid speed, so that the advancing and retreating movement increases in acceleration. As illustrated in Fig. 7, in the present embodiment, a position where the lens thickness becomes thinnest is set at an inner side of the outermost circumferential position of the lens base material. Therefore, the machining tool can be increased in stroke, and the acceleration of the tool can be reduced, so that a load is hardly applied to the machining tool and the machining tool becomes less likely to break.

Next, a method for creating data on the second shape (or the third shape) in the present embodiment will be described. The second shape (or third shape) is shape data to be added to the first shape, and a desired rear surface shape is formed by cutting the material block 14 with the NC lathe machine 41 based on the shape data.

(1) Ridge line 18 and roundness in front of and behind the ridge line

As described above, the region R1 consists of a gentle curve whose cross section is convex upward with respect to the ridge line 18. This is because when a sharp curve is formed at the boundary between the first shape and the second shape, trouble occurs in the polishing and hard coating processes, etc. Therefore, this region must be corrected to be as gentle as the ridge line 18. This region is formed as follows.

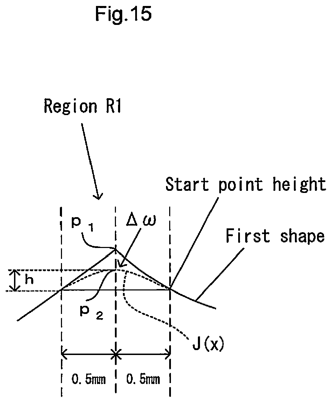

Fig. 15 illustrates an intersection between the first shape and g(t) = 0.4142 at a sectional position along a line connecting the lens center and the lens edge. This intersection is defined as p1. Here, an interpolation line L is drawn and an intersection with a perpendicular line from the intersection p1 is defined as p2.

Here, it is considered to give a smooth supplementary shape $\Delta\omega$ including the ridge line 18 from positions 0.5 mm away from p2 in a tangential direction of a vertex of the ridge line 18.

For example, a curve of the supplementary shape is expressed by a cubic function of j(x) = $ax^3+bx^2+cx+d$. The height h is a height from a starting point height of j(x) to the point p2, and 2h is a height to the point p1.

Here, x is 0 at a position of an end at which the region R1 is connected to the first shape.

First, at the position of the end at which the region R1 is connected to the first shape, in order to make connection without a level difference, j (0) = 0 is required, and therefore, d = 0.

A derivative function obtained by first-order differentiation of this equation is:

$$j'(x) = 3ax^2+2bx+c$$

and an increase when x = 0 is 2h in the height direction per 0.5 in the x direction, so that 2h/0.5 = 4h. Therefore,

$$j'(0) = c = 4h$$

A first-order differential value at the position of p12 must be continuous, so that

$$j'(0.5) = 0.75a+b+4h = 0$$

In addition, since j(0.5) = 0.125a+0.25b+2h = h,

$$0.5a+b+4h = 0$$

Solving this results in a = 0 and b = -4h.

Therefore,

$$j(x) = -4hx^2+4hx$$

By arbitrarily changing the value of h, the roundness of the ridge line can be adjusted.

(2) Circumferential shape of ridge line 18

In the present embodiment, a circumferential shape of the ridge line 18 is designed as follows. However, this design method is just an example, and the circumferential shape may be designed by a different method.

   a. Central coordinates of the ridge line 18 are set. For example, in Example 2, x = 0.2 mm and y = 2.0 mm.
   b. As shown by black squares on the ridge line 18 in Fig. 3, distances from the geometric center to the ridge line 18 are set at 24 points at equiangular intervals (15-degree intervals) . The 0th point is at the height of the eye point position on the nose side, and the 12th point is at the height of the eye point position on the ear side. The 24 points can be set at just 15-degree intervals, so that the 24 points are set here, however, the number of points may be increased. In this example, distances from the rotation center to the nose-side edge and to the ear-side edge of the lens shape are equal to each other, so that all of the initial values of the distances are set to 23 mm. By this setting, a largest edge width on the ear side is 0.4 mm larger than on the nose side, and the edge widths can be preferably balanced.
   c. The distance from the geometric center to the ridge line 18 is displaced. In detail, the distance is set to 23.00 mm at the 0th and 12th points, and 20.10 mm at the 6th point at the upper side and the 18th point at the lower side. Next, the distance is set to 23.52 mm at the 3rd point, 19.17 mm at the 9th point, 19.70 mm at the 15th point, and 23.56 mm at the 21st point. These values are set subjectively according to the lens shape while estimating a final shape, however, the values can be automatically calculated according to the lens shape included in the order data, and in this case, the values can be set by an arbitrary method.

d. The eight distances set thus far are fixed, and the distances at the remaining 16 points are optimized so that the shape of the ridge line 18 becomes smooth. For this, the individual distance values are repeatedly changed little by little in order so that a sum of squares of second-order differentials of 24 distances becomes minimum.

At this time, as a method for calculating squares of second-order differentials of the distances, the following method is executed.

1. Differences between values adjacent to each other of 24 distances are calculated. The 24 points are on the circumference, so that 24 values are obtained.
2. Differences between values adjacent to each other of the 24 differences are further obtained.
3. The 24 second-order differences obtained in this way are respectively squared, and summed.

By this optimization, obtaining a smooth ridge line 18 does not require setting of so many coordinates on the ridge line 18, and a smooth ridge line 18 can be designed with a small number of reference points.
Here, setting of the number of fixed points to 8 is just an example, and the number may be other than 8.

(3) Spline interpolation

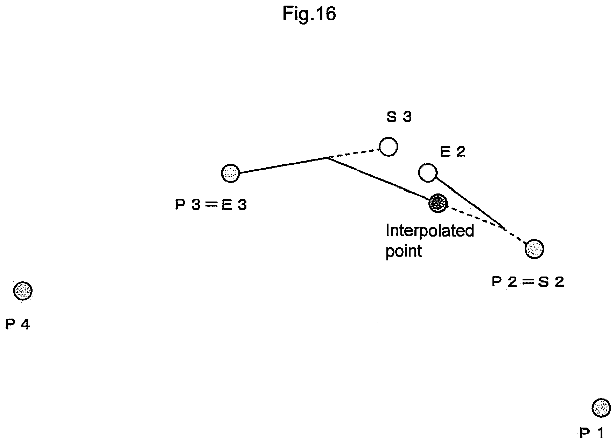

When machining a round lens with the NC lathe machine 41, it is necessary to obtain coordinate values of all over positions on the surface. The same applies for the ridge line 18, and it is necessary to obtain coordinate values on the ridge line 18. Therefore, spline interpolation calculation is performed by using the 24 points described above, and coordinates obtained by this interpolation calculation are defined as coordinate values on the ridge line 18. This will be described based on Fig. 16.
As a publicly known method, coordinates of the 24 points on the XY plane are defined as (xi, yi)i = 0 to 23. For the 24 points of x0 to x23, parametric period spline interpolation can be performed by use of parameters t (0 to 1).
As another easier method, a method in which coordinates between two points are interpolated based on coordinates of four points on the ridge line 18 is shown. The following operation is performed for four points p1 to p4 in Fig. 16. This can be easily applied to 24 points . However, it is assumed that respective XY coordinate values correspond to each point.

```
S2 ← p2
```

```
E2 ← p2+(p3-p1)/4
```

```
S3 ← p3+(p2-p4)/4
```

```
E3 ← p3
```

```
Point to be interpolated =

(1-t)((1-t)S2+t·E2)+t((1-t)S3+t·E3)
```

As a result, coordinates of p2 and p3 correspond to the values of t of 0 and 1.
Here, equations connected by equal signs and using an x coordinate and a y coordinate as variables are shown below.

```
S2x = p2x
```

```
S2y = p2y
```

$$\mathrm{E2x = p2x + (p3x - p1x)/4}$$

$$\mathrm{E2y = p2y + (p3y - p1y)/4}$$

$$\mathrm{S3x = p3x + (p2x - p4x)/4}$$

$$\mathrm{S3y = p3y + (p2y - p4y)/4}$$

$$\mathrm{E3x = p3x}$$

$$\mathrm{E3y = p3y}$$

$$\mathrm{x\ coordinate\ of\ point\ to\ be\ interpolated\ =}$$

$$\mathrm{(1-t)((1-t)S2x + t \cdot E2x) + t((1-t)S3x + t \cdot E3x)}$$

$$\mathrm{y\ coordinate\ of\ point\ to\ be\ interpolated\ =}$$

$$\mathrm{(1-t)((1-t)S2y + t \cdot E2y) + t((1-t)S3y + t \cdot E3y)}$$

In Fig. 16, each of the three line segments is divided into a dotted line and a solid line. All of the ratios of lengths of the dotted lines and lengths of the solid lines of the three line segments are t:1-t.
When t = 0, the interpolated point is P2(S2), and when t = 1, the interpolated point is P3(E3).

(4) Calculation of curvature

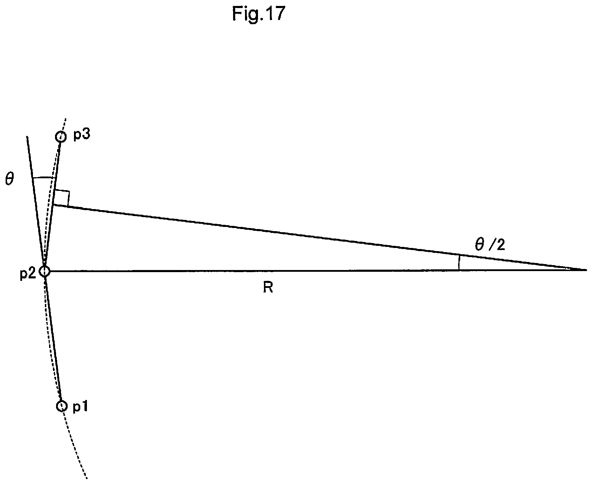

A curvature at an arbitrary position on the ridge line 18 cannot be known only from coordinates of the ridge line 18. For example, the curvature is calculated as follows.
First, a method for approximately calculating the curvature based on coordinates of the 24 points for defining the ridge line is shown. For calculation, a radius of curvature (mm) of a circle passing through coordinates p1 to p3 of a certain three points in this order is calculated, and a reciprocal of the radius of curvature is defined as a curvature (mm$^{-1}$) at p2.
An angle θ illustrated in Fig. 17 is calculated from the vector p1→p2 and the vector p2→p3. Specifically, by dividing an inner product of the two vectors (a sum of a product of X components and a product of Y components) by a magnitude of the two vectors (a square root of a value obtained by summing squares of X components and squares of Y components), a value of cosθ is obtained. Thereafter, calculation is performed according to the following equations:

$$\mathrm{cos\theta = cos^2(\theta/2) - sin^2(\theta/2)}$$

$$\mathrm{1 - cos\theta = 2 \cdot sin^2(\theta/2)}$$

$$\mathrm{sin^2(\theta/2) = 1/2 - (1/2)cos\theta}$$

$$\mathrm{sin\theta/2 = \sqrt{(1/2 - (1/2)cos\theta)}}$$

$$\text{Radius of curvature R = half of mean length of two}$$

$$\text{sides}/(\sin\theta/2)$$

(5) Shape outside boundary

As illustrated in Fig. 7, a position where the thickness of the slope becomes 0 is set as "origin" of t = 0 with respect to a function f(t). t is defined as a distance (mm) that takes a positive value towards the lens center. A position (position d where the thickness is 3 mm) where the region R3 is connected to the region R3 is set as a "start point" of thickness addition. When the thickness at the boundary before rounding process is thinner than 3 mm, the boundary is set as a "start point" of thickness addition. At the start point, t = x. The value of x can be calculated in detail, however, for simple description, it is represented as x in the following equations.

At an outer side of the start point of the region R3, a lens thickness is added according to the cubic function f (t) . At the start point t = x, the amount of thickness addition and variation of the amount of thickness addition are set to 0. That is, thickness addition is smoothly started. At a thinnest point 5 mm outside (defined as negative side) from the origin, the thickness is set to 0.5 mm. At an outer side of the thinnest position, the lens is increased in thickness again, and the thickness is limited to be not more than 1 mm. The thickness may be thicker than 1 mm, however, in this case, the outer circumferential edge thickness becomes thick or thin depending on the position. Here, this thickness is set to be constant over the entire circumference since this setting is considered to be appropriate for easy handling.

The detailed cubic function is, as described above, f(t) = $at^3+bt^2+ct+d$. A realized lens thickness is g(t)+f(t).

However, when the thickness becomes more than 1 mm at an outer side of the position of t-6, the lens thickness is set to 1 mm.

Calculation for determining the thickness is performed so as not to excessively thin the lens thickness and make penetration into the front surface of the lens. For this, the value of the lens thickness at the position where the lens thickness becomes thinnest is set, for example, as follows.

$$f(t) = at^3+bt^2+ct$$

$$f'(t) = 3at^2+2bt+c$$

$$g(t) = 0.4142 \cdot t$$

$$g'(t) = 0.4142$$

At the point of t = x, f(t) = 0, so that

$$f(x) = 0$$

$$ax^3+bx^2+cx+d = 0 \quad ... \quad (1)$$

At the point of t = x, f'(t) = 0, so that

$$f'(x) = 0$$

$$3ax^3+2bx+c = 0 \quad ... \quad (2)$$

The thickness is set so as to become thinnest at a point 5 mm outside (t = -5) from the origin.

$$\texttt{f'(-5)+g'(-5) = 0}$$

$$\texttt{75a-10b+c+0.4142 = 0 ... (3)}$$

In the present embodiment, for securing the thickness, the thickness at this position is set to, for example, 0.5 mm.

$$\texttt{f(-5)+g(-5) = 0.5}$$

$$\texttt{-125a+25b-5c+d-5·0.4142 = 0.5 ... (4)}$$

The value of x is known, so that the equations (1) to (4) given above are solved as simultaneous equations to obtain the values of a, b, c, and d.

The thickness is set to become thinnest at a position 5 mm outside (t = -5) from the origin, and the thickness at this position is set to 0.5 mm, so that the lens thickness does not become thinner than 0.5 mm.

At an arbitrary point at an outer side of the ridge line 18, by assuming a sectional direction connecting this point and the lens center and performing calculation as described above, a thickness at this point can be determined.

In the round lenses 11 to 13 configured in this way, the boundary line 13 between the first shape and the second shape is largely away from the edge 19 of the lens shape in the vertical direction of the horizontally long lens shape, and on the other hand, in the horizontal direction of the lens shape, the boundary line 13 passes through a position out of the use region inside the edge 19 of the lens shape. Therefore, when a user wears eyeglasses in which lenses cut into this lens shape are fitted, a reflection image and a transmission image to be observed by a third person are less likely to be distorted, and gives less sense of strangeness when seen by a third person.

In addition, near outermost circumferences of the round lenses 11 to 13, a portion with a uniform thickness is left, so that the round lenses 11 to 13 are easy to hold.

The examples given above have been described merely as detailed embodiments for illustrating the principle and the concept of the present invention. That is, the present invention is not limited to the embodiments described above. For example, the present invention may be carried out as follows.

- The shapes of the material block 14 and the round lenses 11 and 12 of the embodiments described above are just examples. For example, the lens shape to be set in the round lens 11 may be changed to a shape other than the shape described above as long as the shape is horizontally long, and its disposition on the round lens 11, 12 is changeable. In addition, the shape and the set position of the boundary line 13 may also be other than those described above as long as they cross the edge 19 of the lens shape at a position out of the use region. The ridge line described above has an irregular ring shape consisting of free curves, however, the ridge line 18 may be designed by using a shape such as a portion of an ellipse, a portion of a parabola, and a portion of a hyperbola which are more typical curves so that these curves reach extremes on the ear side.
- The first shape of the round lens 11 may be a shape of SV (single vision) for which only spherical power and cylindrical power are set as lens power, or may be a progressive power lens with a set addition.
- In Example 1 and Example 2, a mean curvature of the ridge line 18 inside the lens shape near the nose side is smaller than a mean curvature of the ridge line 18 inside the lens shape near the ear side. This is an idea corresponding to the sixth and eighteenth means. When the lens has this relationship between the mean curvatures, the curvature of the ridge line 18 inside the lens shape near the ear side may be constant as illustrated in, for example, Fig. 19.
- Coordinates of 24 points are used as references for spline interpolation, however, points more than or less than 24 points may be used as references.
- In the Examples described above, the ridge line 18 and the lens shape cross each other at an angle close to 45 degrees, the ridge line 18 may advance inward of the lens shape up to about 60 degrees . In this case, it is preferable that the ridge line 18 does not enter the lens use region.
- In the inventions of the first and fifteenth means, a design in which the inside of the lens shape near the nose side is not chamfered, that is, the ridge line 18 does not extend to the inside of the lens shape on the nose side is also possible.
- The form of the ridge line 18 may not be a ring shape. A first ridge line passing near the ear side inside the lens shape and a second ridge line passing near the nose side inside the lens shape may be formed separately.
- The above-described calculation of the curvature of the ridge line 18 is shown by way of example, and a different method can be used.

For example, as a different method, a point (xc, yc) equidistant from the three points p1 to p3 is assumed, and from the condition that the distances from this point to the three points are all equal to each other, a simultaneous equation concerning xc and yc may be created and solved.

The present invention is not limited to the configurations described in the embodiments given above. Components of the respective embodiments and modifications described above may be arbitrarily selected and combined. Arbitrary components in the respective embodiments and modifications may be arbitrarily combined with arbitrary components described in Solution to Problem or components embodying arbitrary components described in Solution to Problem. We also intend to acquire the rights to these in an amendment or a divisional application of the present application.

Reference Signs List

11, 12 ... Round lens as precursor lens, 14 ... Material block as lens base material, 16 ... Lens use region, 18 ... Ridge line, 19 ... Edge of lens shape

**Claims**

1. A precursor lens with negative power for eyeglasses obtained by rotating a supported lens base material in a circumferential direction, placing a machining tool at a rear surface side of the lens base material, bringing the machining tool into contact with the rear surface of the lens base material by advancing the machining tool relative to the lens base material toward the lens base material and causing the machining tool to perform machining concentrically by a predetermined sag amount at the contact position along with the rotation, and machining the rear surface of the lens base material into a three-dimensional surface shape by moving the machining tool relative to the lens base material so as to approach or move away from a rotation center of the lens base material, wherein

   a lens shape longer in the horizontal direction than in the vertical direction is set on a lens rear surface side, and on the rear surface,
   a concave shape (hereinafter, referred to as a first shape) capable of exhibiting optical performance as a lens with negative power prescribed for a wearer is set, and
   a shape (hereinafter, referred to as a second shape) in which a line (hereinafter, referred to as a ridge line) connecting the thickest positions in a sectional shape from a lens center or the vicinity of the lens center toward a lens rim is formed to have a curved shape not concave outward inside on the ear side of the lens shape at an outer side of a lens use region, a curvature of the curve of the ridge line becomes largest in the vicinity of a center of a vertical width of the lens shape, and in which the thickness gradually decreasing from the ridge line toward a lens rim inside the lens shape, is combined with the first shape.

2. The precursor lens with negative power for eyeglasses according to Claim 1, wherein a shape (hereinafter, referred to as a third shape) in which the ridge line has a curved shape not concave outward at a position inside or outside the lens shape on a nose side of the lens shape at an outer side of the lens use region, and in which the thickness gradually decreases from the ridge line toward the lens rim inside the lens shape, is combined with the first shape.

3. The precursor lens with negative power for eyeglasses according to Claim 2, wherein a curvature of a curve of the ridge line in the vicinity of the center of the vertical width of the lens shape on the nose side is set to be smaller than a curvature of a curve of the ridge line in the vicinity of the center of the vertical width of the lens shape on the ear side.

4. The precursor lens with negative power for eyeglasses according to Claim 2 or 3, wherein the ridge line of the second shape and the ridge line of the third shape are not connected.

5. The precursor lens with negative power for eyeglasses according to Claim 2 or 3, wherein the ridge line of the second shape and the ridge line of the third shape are connected in a ring shape, and the ridge line is disposed outside the lens shape at upper and lower sides of the lens shape.

6. A precursor lens with negative power for eyeglasses obtained by rotating a supported lens base material in a circumferential direction, placing a machining tool at a rear surface side of the lens base material, bringing the machining tool into contact with the rear surface of the lens base material by advancing the machining tool relative to the lens base material toward the lens base material and causing the machining tool to perform machining concentrically by a predetermined sag amount at the contact position along with the rotation, and machining the rear surface of the lens base material into a three-dimensional surface shape by moving the machining tool relative to the lens base material so as to approach or move away from a rotation center of the lens base material, wherein

a lens shape longer in horizontal direction than in the vertical direction is set on a lens rear surface side, and on the rear surface,

a concave shape (hereinafter, referred to as a first shape) capable of exhibiting optical performance as a lens with negative power prescribed for a wearer is set,

a shape (hereinafter, referred to as a second shape) in which a ridge line is formed to have a curved shape not concave outward inside on the ear side and the nose side of the lens shape at an outer side of a lens use region, and in which the thickness gradually decreases from the ridge line toward a lens rim inside the lens shape, is combined with the first shape, and

when comparing mean curvatures of curves of the ridge line passing through the ear side of the lens shape and the ridge line passing through the nose side, the curvature of the curve of the ridge line on the nose side is smaller than the curvature of the curve of the ridge line on the ear side.

7. The precursor lens with negative power for eyeglasses according to Claim 6, wherein the curvature of the curve of the ridge line on the ear side is set to become largest in the vicinity of the center of the vertical width of the lens shape.

8. The precursor lens with negative power for eyeglasses according to Claim 6 or 7, wherein in the second shape, the ridge line disposed on the ear side and the ridge line disposed on the nose side are not connected.

9. The precursor lens with negative power for eyeglasses according to Claim 6 or 7, wherein the ridge line of the second shape is formed into a ring shape, and the ridge line is disposed outside the lens shape at upper and lower sides of the lens shape.

10. The precursor lens with negative power for eyeglasses according to any of Claims 1 to 9, wherein a coordinate system centered at a geometric center of the lens base material is assumed, and when a horizontal direction on the ear side is set as 0 degree in the coordinate system, the ridge line crosses a contour of the lens shape in an upward or downward direction and in an angle region from 30 to 60 degrees.

11. The precursor lens with negative power for eyeglasses according to any of Claims 1 to 10, wherein the curved shape of the ridge line is optimized on the condition that a sum of squares of second-order differentials of lengths of line segments from a center point or a reference point near the center point to respective points on the ridge line is minimized.

12. A lens for eyeglasses obtained by machining the precursor lens with negative power for eyeglasses according to any of Claims 1 to 11, in which the curve of the ridge line is shaped not to be concave outward, into the lens shape.

13. A lens for eyeglasses obtained by machining the precursor lens with negative power for eyeglasses according to any of Claims 1 to 12, in which in the second shape, the ridge line is shaped so that the thickness gradually decreases from the ridge line toward the lens rim also outside the lens shape, into the lens shape.

14. A lens for eyeglasses obtained by machining the precursor lens with negative power for eyeglasses according to any of Claims 1 to 13 into the lens shape.

15. A method for machining a precursor lens with negative power for eyeglasses, comprising: rotating a supported lens base material in a circumferential direction; placing a machining tool at a rear surface side of the lens base material; bringing the machining tool into contact with the rear surface of the lens base material by advancing the machining tool relative to the lens base material toward the lens base material and causing the machining tool to perform machining concentrically by a predetermined sag amount at the contact position along with the rotation; and machining the rear surface of the lens base material into a three-dimensional surface shape by moving the machining tool relative to the lens base material so as to approach or move away from a rotation center of the lens base material, wherein

a lens shape longer in the horizontal direction than in the vertical direction is set on the lens rear surface side, and on the rear surface of the lens base material,

a surface formed by combining

a concave shape (hereinafter, referred to as a first shape) capable of exhibiting optical performance as a lens with negative power prescribed for a wearer, and

a shape (hereinafter, referred to as a second shape) in which a ridge line is formed to have a curved shape not concave outward inside on the ear side of the lens shape at an outer side of the lens use region, a curvature of the curve of the ridge line becomes largest in the vicinity of a center of a vertical width of the lens shape, and in which the thickness gradually decreases from the ridge line toward a lens rim inside the lens shape, is machined.

16. The method for machining a precursor lens with negative power for eyeglasses according to Claim 15, wherein a curved shape (hereinafter, referred to as a third shape) in which the ridge line is not concave outward inside the nose side of the lens shape at an outer side of the lens use region, and in which the thickness gradually decreases from the ridge line toward the lens rim inside the lens shape, is combined with the first shape.

17. The method for machining a precursor lens with negative power for eyeglasses according to Claim 16, wherein a curvature of a curve of the ridge line in the vicinity of the center of the vertical width of the lens shape on the nose side is set to be smaller than a curvature of a curve of the ridge line in the vicinity of the center of the vertical width of the lens shape on the ear side.

18. A method for machining a precursor lens with negative power for eyeglasses, comprising: rotating a supported lens base material in a circumferential direction; placing a machining tool at a rear surface side of the lens base material; bringing the machining tool into contact with the rear surface of the lens base material by advancing the machining tool relative to the lens base material toward the lens base material and causing the machining tool to perform machining concentrically by a predetermined sag amount at the contact position along with the rotation; and machining the rear surface of the lens base material into a three-dimensional surface shape by moving the machining tool relative to the lens base material so as to approach or move away from a rotation center of the lens base material, wherein

a lens shape longer in the horizontal direction than in the vertical direction is set on a lens rear surface side, and on the rear surface of the lens base material,

a concave shape (hereinafter, referred to as a first shape) capable of exhibiting optical performance as a lens with negative power prescribed for a wearer, and

a shape (hereinafter, referred to as a second shape) in which a ridge line is formed to have a curved shape not concave outward inside on the ear side and the nose side of the lens shape at outer sides of a lens use region, and in which the thickness gradually decreases from the ridge line toward a lens rim inside the lens shape, are combined, and at the time of the combination, when comparing mean curvatures of curves of the ridge line passing through the ear side of the lens shape and the ridge line passing through the nose side, the curvature of the curve of the ridge line on the nose side is set to be smaller than the curvature of the curve of the ridge line on the ear side.

19. The method for machining a precursor lens with negative power for eyeglasses according to Claim 18, wherein machining is performed so that a curvature of the curve of the ridge line on the ear side becomes largest in the vicinity of the center of the vertical width of the lens shape.

20. The method for machining a precursor lens with negative power for eyeglasses according to any of Claims 15 to 19, wherein the curved shape of the ridge line is optimized on the condition that a sum of squares of second-order differentials of lengths of line segments from a center point or a reference point near the center point to respective points on the ridge line is minimized.

Fig.1

Fig.2

Fig.3

Fig.4

Fig.5

Fig.6

Fig.7

Fig.8

40 35 30 25 20 15 10 5 0 5 10 15 20 25 30

Ear side

Nose side

18

19

Fig.9

40  35  30  25  20  15  10  5  0  5  10  15  20  25  30

Thick at this position

21

Excessively cut

Ear side

Nose side

19

Thick at this position

Fig.10

(a)

(b)

(c)

Fig.11

(a)

(b)

(c)

Fig.12

Fig.13

14

32

X-axis direction

Z-axis direction

31

Fig.14

# Fig.15

Region R1

Start point height

First shape

$p_1$   $\Delta\omega$

$h$

$p_2$

$J(x)$

0. 5mm   0. 5mm

Fig.16

S 3

E 2

P 3 = E 3

Interpolated
point

P 2 = S 2

P 4

P 1

Fig.17

Fig.18

(a)

(b)

(c)

(d)

Fig.19

Fig.20

## INTERNATIONAL SEARCH REPORT

| International application No. |
| --- |
| PCT/JP2019/004560 |

A. CLASSIFICATION OF SUBJECT MATTER
Int. Cl. G02C13/00(2006.01)i, B23B5/00(2006.01)i, G02C7/02(2006.01)i

According to International Patent Classification (IPC) or to both national classification and IPC

B. FIELDS SEARCHED

Minimum documentation searched (classification system followed by classification symbols)
Int. Cl. G02C13/00, B23B5/00, G02C7/02

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2008-89940 A (TAKEDA, Yasuo) 17 April 2008, paragraphs [0002]-[0004], [0011], [0012], fig. 12, 13 (Family: none) | 1-20 |
| X | JP 2016-57324 A (TOKAI OPTICAL CO., LTD.) 21 April 2016, paragraphs [0001]-[0013], [0014]-[0019], fig. 6, 7 (a) (Family: none) | 1-20 |
| A | US 2007/0296913 A1 (TABACCHI, Massimiliano) 27 December 2007, entire text, all drawings & WO 2006/057015 A1 & EP 1817626 A1 & AT 497189 T & ES 2357955 T3 | 1-20 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16.04.2019 | 14.05.2019 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 923 063 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002239882 A

- JP 2009208175 A